# FASCICULE DE BREVET EUROPEEN

(11) **EP 0 466 619 B1**
(45) Date de publication et mention de la délivrance du brevet: **02.10.1996**
(21) Numéro de dépôt: 91420236.1
(22) Date de dépôt: 09.07.1991
(51) Int. Cl.: H02H 9/04

(54) **Dispostif de protection contre des surtensions**
Einrichtung zum Schutz gegen Überspannungen
Overvoltage protection device

(30) Priorité: 13.07.1990 FR 9009264
(43) Date de publication de la demande: 15.01.1992
(73) Titulaire: SGS-THOMSON MICROELECTRONICS S.A., F-94250 Gentilly (FR)
(72) Inventeur: Bremond, André, F-37270 Veretz (FR); Pezzani, Robert, F-37210 Parcay Meslay (FR); Senes, Albert, F-37540 St Cyr sur Loire (FR)
(74) Mandataire: de Beaumont, Michel

(56) Documents cités:
- FR-A- 2 172 332
- US-A- 3 454 860
- US-A- 4 068 281

## Description

La présente invention concerne un dispositif de protection contre des surtensions.

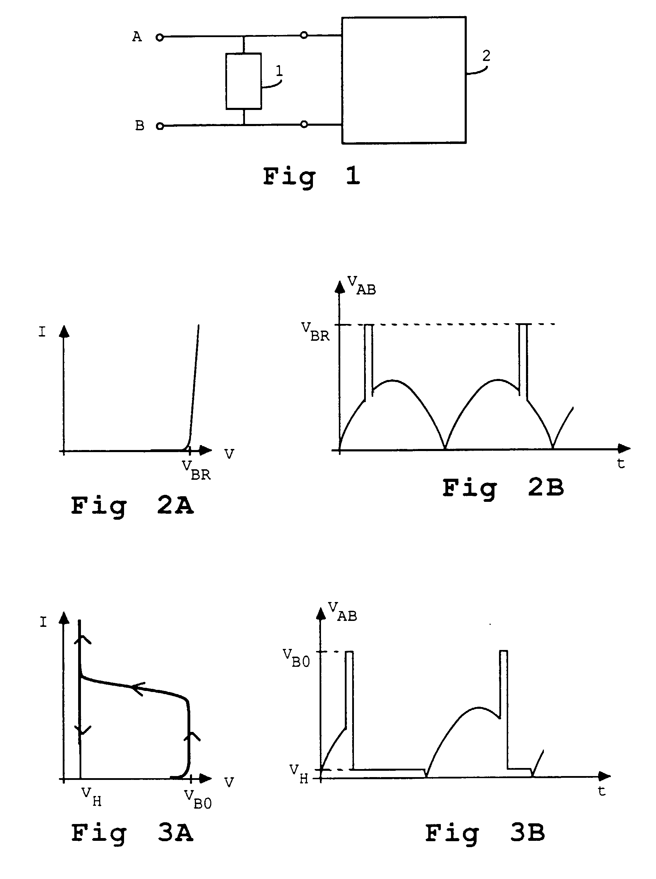

La figure 1 représente le montage habituel d'un dispositif de protection 1. Etant donné une tension d'alimentation disponible entre des bornes d'entrée A et B, et un circuit électronique à protéger 2, le dispositif de protection est disposé entre les bornes d'entrée A et B.

Deux types principaux de dispositifs de protection sont couramment utilisés.

Un premier type de dispositif de protection, par exemple une diode zener, est destiné à écrêter des impulsions de surtension survenant entre les bornes A et B. Ce composant présente une caractéristique du type illustré en figure 2A, à savoir que, dès que la tension à ses bornes dépasse une certaine valeur, appelée tension de claquage ou tension d'avalanche V_{BR} de la diode, le courant croît à tension sensiblement constante. Ainsi, comme le représente la figure 2B, des impulsions P1 et P2 venant se rajouter à une tension d'alimentation telle qu'une tension alternative redressée double alternance sont écrêtées et, dès la fin de l'impulsion, l'alimentation normale continue à être présente aux bornes du dispositif 2 à protéger.

Un deuxième type de dispositif de protection, tel qu'un thyristor à déclenchement par avalanche présente la caractéristique illustrée en figure 3A. Dès que la tension appliquée à ce dispositif dépasse une valeur V_{B0}, dite tension de retournement, le dispositif devient conducteur et la tension à ses bornes chute à une valeur très faible. Le dispositif reste ensuite à l'état conducteur tant que le courant d'alimentation n'est pas réduit à une valeur inférieure à un courant de maintien I_{H}. A titre d'exemple, la tension V_{B0} peut être de l'ordre de quelques centaines de volts de la tension V_{H} de l'ordre de la dizaine de volts. L'effet d'un tel dispositif de protection sur une tension alternative redressée double alternance est illustré en figure 3B. On voit qu'à partir de l'impulsion P1, l'alimentation du dispositif 2 est coupée pour ne remonter que lors de l'alternance suivante.

Chacun des dispositifs de protection décrits précédemment présente des avantages et des inconvénients.

L'inconvénient principal des dispositifs de type diode zener est que, quand les impulsions deviennent de longue durée, un courant notable circule pendant la durée de l'impulsion dans la diode qui présente une tension élévée à ses bornes (de l'ordre de 400 volts par exemple pour un dispositif de protection du réseau) et qu'en conséquence la diode s'échauffe. Il faut alors prévoir des diodes de grande dimension et donc d'un coût élevé.

L'inconvénient principal des dispositifs de type thyristor à avalanche est que, après chaque surtension, l'alimentation est interrompue jusqu'à remise à zéro de la tension d'alimentation. Il en résulte des dysfonctionnements pour le dispositif à protéger qui ne reçoit plus d'alimentation ou qui doit comprendre une capacité réservoir d'entrée importante pour pallier ces chutes de tension. Malgré cet inconvénient, on est amené à utiliser des dispositifs de protection de ce type dès que les surtensions sont susceptibles d'être d'énergie (amplitude ou durée) importante.

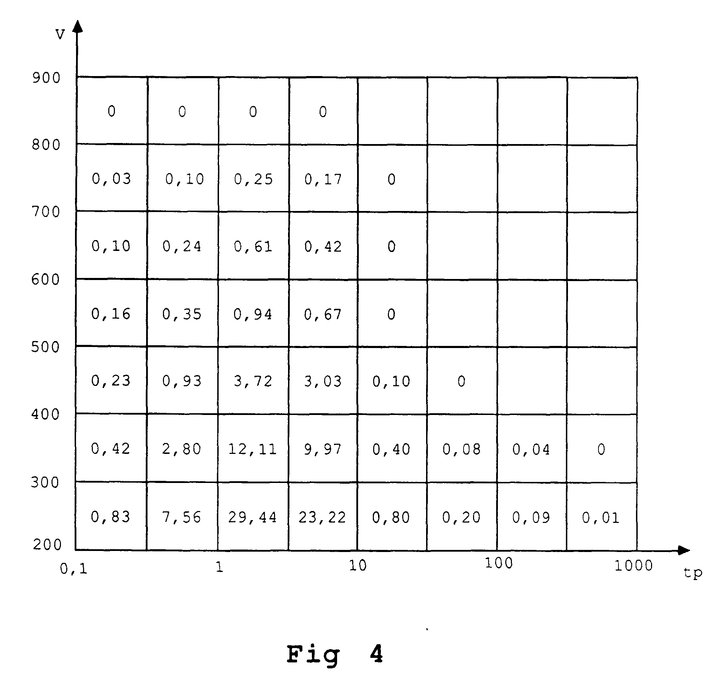

Or en pratique, le problème se pose de façon quelque peu différente. En effet, la figure 4 illustre le résultat d'une étude statistique effectuée sur des lignes d'abonnés en Europe. Cette étude correspond à l'observation pendant 112 jours d'une ligne d'abonné et révèle l'apparition de 1009 surtensions. Plus particulièrement, la figure 4 est un diagramme montrant la probabilité d'apparition de surtensions d'amplitude et de durée données. Le diagramme de la figure 4 montre que 29,44 % des surtensions observées ont une valeur comprise entre 200 et 300 volts au-dessus de la tension normale du réseau et une durée entre 1 et 3 microsecondes alors que 0,42 % des surtensions observées seulement ont une valeur comprise entre 600 et 700 V et une durée comprise entre 3 et 10 microsecondes.

On peut classer les surtensions observées en deux catégories, celles à forte énergie et celles à faible énergie. Les surtensions à forte énergie sont caractérisées soit par une longue durée (par exemple supérieure à 10 microsecondes) même si leur amplitude est relativement faible (par exemple inférieure à 300 volts), soit par une forte amplitude (par exemple supérieure à 600 volts) même si leur durée est relativement courte (par exemple inférieure à une microseconde). Les surtensions à faible énergie présentent les caractéristiques complémentaires. Dans l'exemple ci-dessus, ce sont celles qui ont une amplitude inférieure à 600 volts et une durée inférieure à 10 microsecondes.

En ce reportant au diagramme de la figure 4, on voit que les impulsions de faible énergie apparaissent dans 96,38 % des cas observés tandis que les surtensions de forte énergie ne représentent que 3,62 % des cas. Néanmoins, classiquement, et pour tenir compte des surtensions à forte énergie, on ne peut se contenter d'un dispositif de protection à écrêtage tel qu'une diode zener et il convient d'avoir recours à un dispositif coupe-circuit du type thyristor à avalanche.

Un objet de la présente invention est de prévoir un dispositif de protection fonctionnant en écrêtage pour des impulsions de surtension de faible énergie et en coupe-circuit seulement pour des impulsions de forte énergie.

De tels circuits sont décrits dans FR-A-2 172 332 et US-A-4 068 281 mais font appel à des techniques d'écrêtage différentes. Le premier document propose la connexion en série d'une diode zener et d'une résistance. Le thyristor entre en conduction quand le courant d'écrêtage passant dans la résistance fait augmenter la chute de tension au-dessus d'un seuil. Le deuxième document suggère l'écrêtage par une varistance ayant une troisième borne dont la tension dépend du courant d'écrêtage. Dans le cas d'un courant élevé, cette tension attaquant la gâchette d'un thyristor par une résistance à coefficient de température négatif (NTC) déclenche la mise en conduction du thyristor.

Pour atteindre ces objets ainsi que d'autres, la présente invention prévoit un dispositif de protection contre des surtensions susceptibles d'intervenir entre deux bornes d'alimentation, comprenant, entre ces bornes, d'une part, un thyristor, d'autre part, des première et deuxième diodes zener en série, l'anode de la première diode étant connectée à la cathode du thyristor et la cathode de la deuxième diode étant reliée à l'anode du thyristor, et une troisième diode zener disposée entre la gâchette du thyristor et le point de connexion des première et deuxième diodes, l'anode de la troisième diode étant reliée à la gâchette et la troisième diode présentant une tension d'avalanche supérieure à celle de la première diode.

Les composants sont choisis de sorte que les première et deuxième diodes écrêtent les surtensions supérieures à la somme de leurs tensions d'avalanche et que le thyristor entre en conduction quand la tension aux bornes de la première diode atteint la tension d'avalanche de la troisième diode.

Ces objets, caractéristiques et avantages ainsi que d'autres de la présente invention seront exposés plus en détail dans la description suivante de modes de réalisation particuliers faite en relation avec les figures jointes parmi lesquelles :
les figures 1 à 4 destinées à illustrer l'état de la technique et le problème que vise à résoudre la présente invention ont été décrites précédemment ;
la figure 5 représente un schéma de circuit d'un dispositif de protection selon la présente invention ; et

Les figures 6A et 6B illustrent deux types de fonctionnement particuliers du dispositif de protection selon la présente invention.

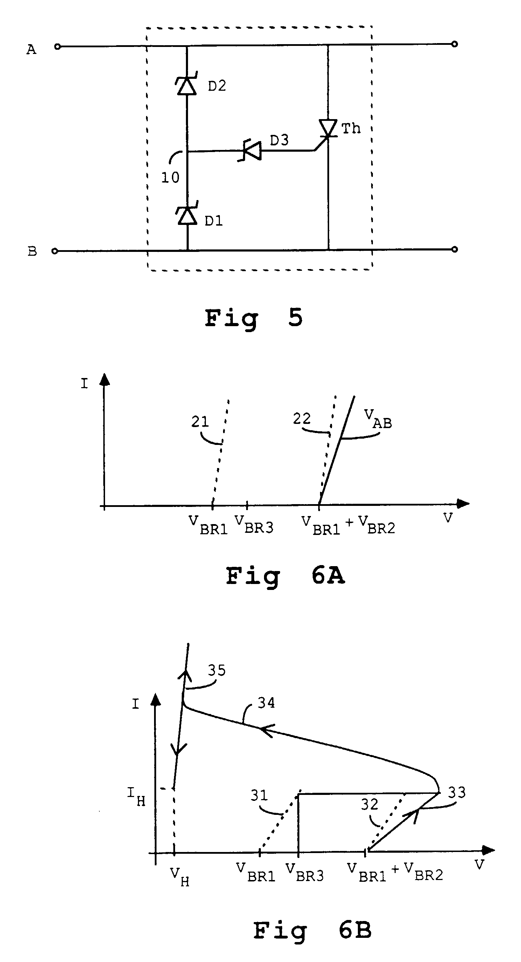

Comme le représente la figure 5, le dispositif selon la présente invention comprend, entre les bornes A et B sur lesquelles est susceptible de survenir une impulsion de surtension, le montage en série de deux diodes D2 et D1, la cathode de la diode D2 étant connectée à la borne A et l'anode de la diode D1 à la borne B. Entre les bornes A et B, est également disposé un thyristor Th dont l'anode est connectée à la borne A et la cathode à la borne B. Ce thyristor comprend une gâchette de cathode reliée par l'intermédiaire d'une troisième diode zener D3 au point de connexion 10 des diodes D1 et D2. Le thyristor Th est choisi pour que sa tension V_{B0} de mise en conduction par avalanche résultant d'une surtension à ses bornes soit très nettement supérieure à la somme des tensions d'avalanche des diodes D1 et D2. Ainsi, dans le cadre de la présente invention, la thyristor Th est susceptible d'être mis en conduction uniquement par commande par sa gâchette.

Les diodes D1, D2 et D3 ont respectivement des tensions de mise en avalanche égales à V_{BR1}, V_{BR2} et V_{BR3}. Selon la présente invention, V_{BR3} est choisi supérieur à V_{BR1}. Etant donné les valeurs des tensions envisagées par les dispositifs de protection, de l'ordre de quelques centaines de volts, la chute de tension gâchette/cathode du thyristor, de l'ordre du volt, est négligeable et l'on n'en tiendra pas compte dans les explications ci-après.

La figure 6A illustre par un diagramme courant/tension (I/V) le fonctionnement du dispositif de protection selon la présente invention pour des surtensions de faible énergie. Quand la valeur de la surtension devient supérieure à V_{BR1} + V_{BR2}, les deux diodes D2 et D1 entrent en avalanche et maintiennent la tension à leurs bornes sensiblement aux valeurs respectives V_{BR1} et V_{BR2}. Néanmoins, comme le représentent les courbes en pointillés 21 et 22, la tension à leurs bornes croît légèrement tandis qu'un courant les traverse. La tension V_{AB} résultante est représentée par une courbe en trait plein.

La figure 6B représente le même diagramme courant/ tension dans le cas d'une surtension de forte énergie ou de longue durée. Une fois que les diodes rentrent en avalanche, elles sont traversées par un courant relativement important et, si la surtension est de forte amplitude ou de longue durée, la tension aux bornes de chacune des diodes s'élève notamment par suite de leur échauffement comme cela est représenté par les courbes en pointillés 31 et 32, la tension V_{AB} résultante étant illustrée par la courbe 33. Dès que la tension aux bornes de la diode D1 atteint la tension d'avalanche V_{BR3} de la diode D3, le thyristor Th rentre en conduction et la tension V_{AB} résultante suit le chemin 34-35. Ensuite, le thyristor reste conducteur jusqu'à ce que le courant devienne inférieur au courant de maintien I_{H} de ce thyristor.

On obtient ainsi un dispositif fonctionnant en écrêteur pour des impulsions de faible énergie et en coupe-circuit pour des impulsions de forte énergie.

L'homme de l'art pourra, en fonction des caractéristiques qu'il souhaite conférer au dispositif de protection pour une application particulière, choisir l'écart entre les tensions d'avalanche des diodes D1 et D3 qui détermine le passage du fonctionnement en dispositif écrêteur au fonctionnement en dispositif du type court-circuit.

D'autre part, on notera que les pentes et les allures des diagrammes courant/tension sont tracées arbitrairement pour simplifier l'illustration et l'exposé de l'invention. L'homme de l'art pourra se référer aux caractéristiques habituelles des diodes zener et des thyristors pour tracer des diagrammes précis.

Dans la pratique, la somme des tensions d'avalanche des diodes D1 et D2 pourra être choisie de l'ordre de 400 volts, les deux diodes étant identiques, et la diode D3 pourra être choisie avec une tension d'avalanche de l'ordre de 250 volts. De sorte que le dispositif fonctionne en écrêteur sensiblement entre 400 et 450 volts puis en coupe-circuit au-delà de 450 volts.

La présente invention a été exposée de façon générale et dans le cadre de modes de réalisation particuliers. L'homme de l'art pourra y apporter diverses variantes et modifications. Notamment, on a décrit ici un dispositif de protection unidirectionnel. La présente invention s'applique de même à des composants de protection bidirectionnels, les transformations et montages destinés à former des dispositifs de protection bidirectionnels à partir de dispositifs de protection unidirectionnels étant bien connus de l'homme de l'art.

## Revendications

1. Dispositif de protection contre des surtensions susceptibles d'intervenir entre deux bornes d'alimentation (A, B) comprenant, entre ces bornes, un thyristor (Th), caractérisé en ce qu'il comprend en outre, entre ces bornes, des première et deuxième diodes zener en série, l'anode de la première diode (D1) étant connectée à la cathode du thyristor et la cathode de la deuxième diode (D2) étant reliée à l'anode du thyristor, une troisième diode zener (D3) étant disposée entre la gâchette du thyristor et le point de connexion (10) des première et deuxième diodes, l'anode de la troisième diode étant reliée à la gâchette, la troisième diode présentant une tension d'avalanche supérieure à celle de la première diode, et lesdits composants du dispositif étant choisis de sorte que les première et deuxième diodes écrêtent les surtensions supérieures à la somme de leurs tensions d'avalanche et que le thyristor entre en conduction quand la tension aux bornes de la première diode atteint la tension d'avalanche de la troisième diode.

## Patentansprüche

1. Schutzeinrichtung gegen Überspannungen, die dazu neigen, zwischen zwei Versorgungsanschlüssen (A, B) aufzutreten, wobei die Schutzeinrichtung einen Thyristor (Th) zwischen den Anschlüssen aufweist, dadurch **gekennzeichnet,** daß sie ferner folgendes aufweist: erste und zweite Zenerdioden in Reihe, wobei die Anode der ersten Diode (D1) mit der Kathode des Thyristors verbunden ist, wobei die Kathode der zweiten Diode (D2) mit der Anode des Thyristors verbunden ist, eine dritte Zenerdiode (D3), die zwischen dem Thyristor-Gate und der Verbindung (10) der ersten und zweiten Dioden plaziert ist, wobei die Anode der dritten Diode eine Durchbruch- bzw. Avalanchespannung besitzt, die größer als diejenige der ersten Diode ist, wobei die Bauteile der Einrichtung derart ausgewählt werden, daß die ersten und zweiten Dioden Überspannungen größer als die Summe ihrer Durchbruch- bzw. Avalanchespannungen abschneiden, und daß der Thyristor angeschaltet wird, wenn die Spannung über die erste Diode die Avalanchespannung der dritten Diode erreicht.

## Claims

1. A protection device against overvoltages liable to occur between two supply terminals (A, B) comprising, between said terminals, a thyristor (Th), characterized in that it further comprises first and second zener diodes in series, the anode of said first diode (D1) being connected to the cathode of said thyristor and the cathode of said second diode (D2) being connected to the anode of said thyristor, a third zener diode (D3) being placed between the thyristor gate and the junction (10) of said first and second diodes, the anode of said third diode having an avalanche voltage higher than that of said first diode, said components of the device being selected so that the first and second diodes clip overvoltages higher than the sum of their avalanche voltages and that the thyristor is turned on when the voltage across the first diode reaches the avalanche voltage of the third diode.
